# EUROPEAN PATENT APPLICATION

(11) **EP 4 632 909 A1**
(43) Date of publication of application: **15.10.2025**
(21) Application number: 25166929.7
(22) Date of filing: 28.03.2025
(51) Int. Cl.: H01M 50/249, B60K 1/04, B60L 50/64, H01M 50/262, H01M 50/271, B60L 50/60

(54) **IMPROVED BATTERY PACK ARRANGEMENT FOR A VEHICLE**

(30) Priority: 29.03.2024 IT 202400007120
(71) Applicant: On-Highway Brasil Ltda., 35703-138 Sete Lagoas, Minas Gerais (BR)
(72) Inventor: COSTA, Daniel, 35703-138 SETE LAGOAS (BR); DA COSTA LIMA NETO, Bernardo, 35703-138 SETE LAGOAS (BR); DOMINGOS DE SA, Thiago Malaquias, 35703-138 SETE LAGOAS (BR)
(74) Representative: Studio Torta S.p.A.

(57) **Abstract**

Battery pack (5) for a heavy vehicle (1), the battery pack (5) extending along a longitudinal axis (A'), a transversal axis (B') and a vertical axis (C' ) and comprising a base (6) configured to be fixed to a portion (2) of the vehicle (1) and a cover (7) selectively carried by said base (6),
the cover (7) being connected to one wall of said the (6) via a releasable connection (11) in order to assume an attached configuration wherein said cover (7) is connected to one among said walls (6a, 6b, 6c) of said base (6) or a detached configuration wherein the cover (7) is separated from the base (6).

## Description

### CROSS-REFERENCE TO RELATED APPLICATIONS

This patent application claims priority from Italian patent application no. 102024000007120 filed on March 29, 2024, the entire disclosure of which is incorporated herein by reference.

### TECHNICAL FIELD

The present invention concerns an improved battery pack for a vehicle.

The present invention finds its preferred, although not exclusive, application heavy vehicles such as trucks. Reference will be made to this application by way of example below.

### BACKGROUND OF THE INVENTION

Vehicles tends more and more to be electrified in order to reduce their pollutant emissions. Therefore, vehicles are more and more provided with batteries in order to allow the storing of electrical energy to allow the operation of the vehicle.

Accordingly, such batteries are stored in one or more battery packs in order to protect the batteries from the external environment, in particular from dirty elements, from fluids such as rain and by temperature variations.

Such battery packs are usually stored underneath the vehicle chassis, near reservoirs for storing other propellant fluids or for storing pressurized fluid.

Clearly, such positioning has drawbacks. First, this arrangement reduces the space for the aforementioned reservoirs that are designed smaller with respect to the needs of the vehicle.

Therefore, it is known to provide a very compact battery pack for housing electrical batteries one above the other.

However, electrical batteries may vary their dimensions country by country. Accordingly, it is possible that a battery pack could not be suitable for being used for batteries sold in different countries.

Accordingly, costs for manufacturing battery packs and related vehicles are increased.

Therefore, the need is felt to avoid the aforementioned problems linked to the disposition of battery packs in heavy vehicles.

An aim of the present invention is to satisfy the above mentioned needs in a cost-effective and optimized manner.

### SUMMARY OF THE INVENTION

The aforementioned aim is reached by a battery pack and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle comprising a battery pack according to the invention;
- Figure 2 is a perspective view, with parts removed for clarity, of a battery pack according to the invention; and
- Figure 3 is a perspective view of a battery pack according to the invention;

### DETAILED DESCRIPTION OF THE INVENTION

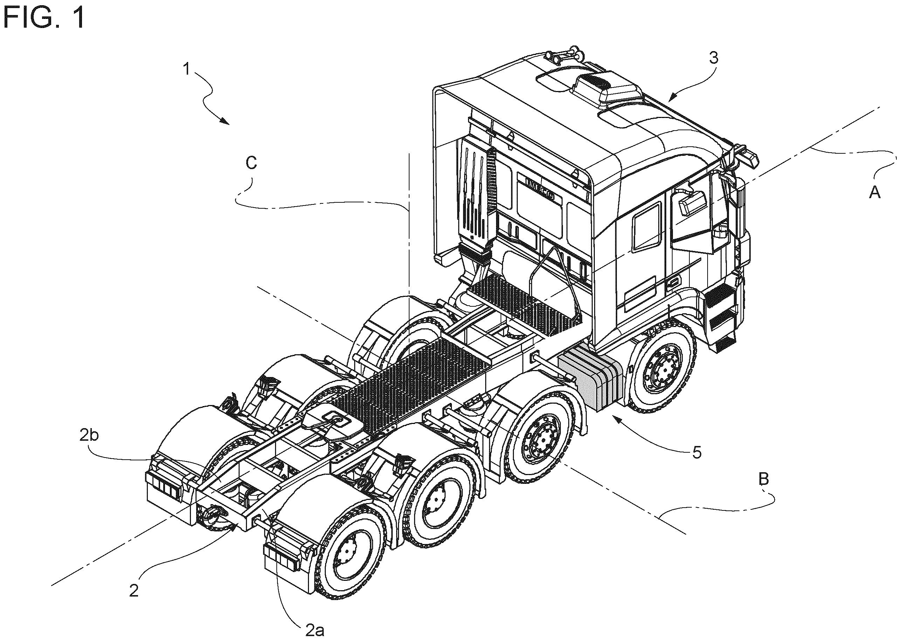

Figure 1 discloses a vehicle 1, such as a heavy vehicle e.g. a truck as shown, that extends along a longitudinal axis A, a transversal axis B and a vertical axis C.

The vehicle 1 in particular comprises a chassis 2 extending along a longitudinal axis A and a cabin 3 carried by chassis 2 and configured to define a space for a driver of the vehicle 1.

In detail, as known, the chassis 2 comprises a pair of longitudinal side members 2a, 2b extending along longitudinal axis A and distanced about transversal axis B.

The vehicle 1 advantageously comprises a battery pack 5 carried below the chassis 2, in particular close to the cabin 3. As per the disclosed embodiment, the battery pack 5 is carried by one of the side members 2a, 2b, in particular externally with respect to the transversal space comprised by these latter.

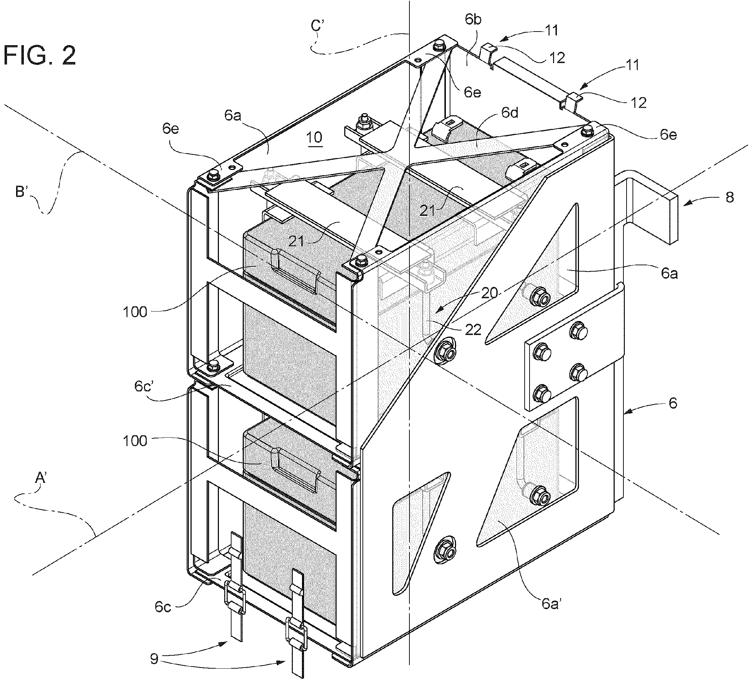

Making reference to figure 2, the battery pack 5 extends along a longitudinal axis A', a transversal axis B' and a vertical axis C'. In function of the disposition of the vehicle 1, the aforementioned longitudinal, transversal and vertical axis A', B', C' of the battery pack 5 may or may not coincide with the longitudinal, transversal and vertical axis A, B, C of the vehicle 1.

In the disclosed embodiment, advantageously, the longitudinal axis A' of the battery pack 5 is aligned with the transversal axis B of the vehicle 1 in order to minimize the space occupied on the latter.

The battery pack 5 is configured to define a space 10 suitable for store at least an electrical battery 100 for allowing the operation of the vehicle.

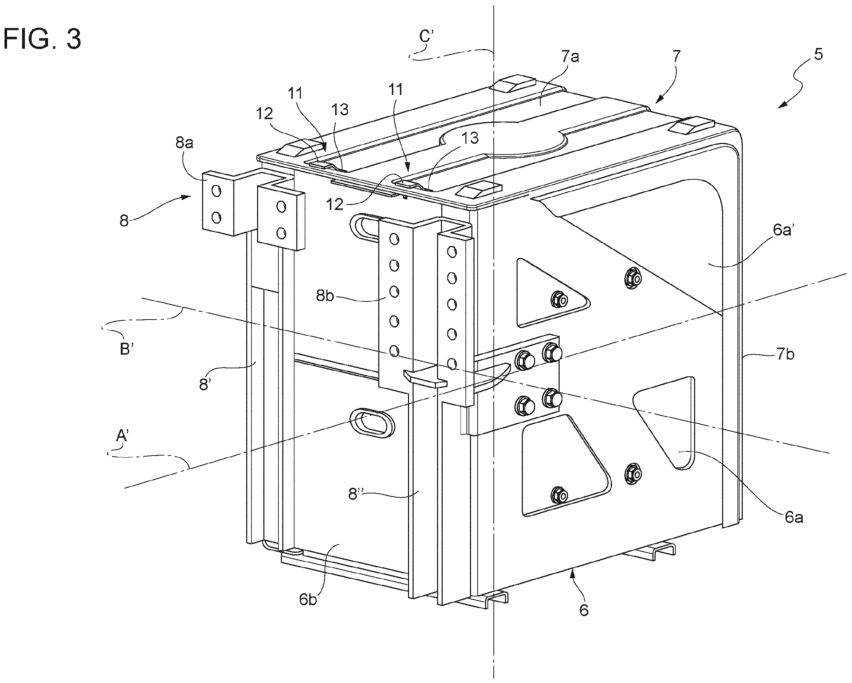

In detail, making reference to Figures 2 and 3, the battery pack 5 comprises a base 6 and a cover 7 that are selectively fixed one to the over in order to delimit a space 10 for housing the aforementioned at least one battery 100.

In the disclosed embodiment, the space 10 is configured to house a pair of electrical batteries 100 placed one vertically over the other the vertical axis C', in particular aligned along such vertical axis C' one to the other.

In detail, the base 6 comprises a plurality of lateral walls 6a, a rear wall 6b and a base wall 6c connected together to limit partially the aforementioned space 10. In the disclosed embodiment the walls 6a, 6b, 6c define a parallelepiped shape extending mainly along vertical axis C' .

The base 7 further comprises an intermediate wall 6c' housed within space 10 and configured to divide this latter. The intermediate wall 6c' is faced to the base wall 6c and is positioned vertically in order to divide vertically equal the space 10 in an upper and a lower portions each configured to house a battery 100.

In detail, the intermediate wall 6c' is connected between the pair of lateral walls 6a.

The cover 7 comprises essentially a roof 7a and a front wall 7b dimensioned to cooperate at contact with the walls 6a, 6b, 6c of the base 6 and defined together with these latter the space 10. In particular, when the cover 7 is fixed to the base 6, the roof 7a is faced to the intermediate wall 6c' along vertical axis C' and the rear wall 6b is faced to the front wall 7b along longitudinal axis A'.

As shown, the lateral walls 6a may be realized as separate elements connected by a flange 6a' in order to provide a modularity for allowing insertion in space 10 of more batteries 100. In particular, flange 6a' may be realized as a single element with the rear wall 6b. Conversely, they can be realized as a single piece together with rear wall 6b.

Base 6 further comprises at least a cross-member 6d configured to connect fixedly together two lateral walls 6a. Preferably, the base 6 further defines a plurality of flanges 6e extending along transversal axis B cantilevered from upper edge of lateral walls 2a towards the opposite lateral wall 2a. The crossmember 6d is preferably fixed, e.g. via threaded connection as shown, to such flanges 6e.

In the shown embodiment, the flanges 6e are two-by-two faced one with respect to the other along transversal axis B direction and a single x-shaped crossmember 6d is present.

In the shown embodiment, the base wall 6c and the intermediate wall 6c' are realized as a separate wall fixed, e.g. by threaded elements or by welding, to the rear wall 6b and the lateral walls 6a.

Referring back to cover 7, it is noticed that cover 7 is connected by a releasable connection 11 to a portion of the base 6. In detail, releasable connection 11 is realized between the roof 7a in the edge opposite to the front wall 7b and the rear wall 6b. In further detail, the releasable connection 11 allows a rotation of the cover 7 about the aforementioned edge of roof 7a, therefore about an axis that is parallel to transversal axis B'.

Therefore, the cover 7, can be attached or detached to the base 6. When attached to the base 6, it can assume a first configuration wherein allows access to space 10 and a second configured wherein it cooperates with walls 6a, 6b, 6c of the base 6 to isolate space 10.

In detail, the releasable connection 11 is defined by at least one opening 13 realized in one between the base 6 and the cover 7 configured to house at least one protuberance 12 realized in the other between the base and the cover 7.

In the shown embodiment, the releasable connection 11 comprises a pair of openings 13 realized in the roof 7a of the cover 7 and configured each to house a respective protuberance 12.

In detail, the protuberance 12 extends from the rear wall 6b and are substantially realized as flanged extending from rear wall 6b about the rotation axis of the cover 7 about base 6.

On the opposite end along the longitudinal axis A', the battery pack 5 comprises locking means 9 configured to fix the cover 7 to the base 6 when placed in the above defined second configuration.

Locking means 9 may comprises, for instance as shown, a lever mechanism, configured to coupler together the front wall 7b to the base 6c.

The battery pack 2 further comprises a fixation system 20 configured to fix the at least one battery 100 to one of the walls 6a, 6b, 6c, to provide a compression load between the at least one battery 100 to the aforementioned wall 6a, 6b, 6c.

In detail, the fixation system 20 comprises at least a strip 21 coupled to at least one battery 100 and a pair of levers 22 configured to fix the strip 21, i.e. its extremities to another wall 6a, 6b, 6c of the battery pack 5 in order to provide the above-described compression load.

In particular, the lever is screwed via nuts on its extremity between the strip 21 and the wall 6s. No further detail will be provided on the fixation system 20 for sake of brevity being evident from the provided figure 2.

Battery pack 5 further comprising fixation portions 8 configured to allow fixation of the battery pack 5, i.e. of base 6, to the chassis 2 In particular in order to fix the battery pack 5 cantilevered vertically below a side member 2a, 2b thereof.

Preferably, fixation portion 8 comprises a pair of fixation members 8', 8'' coupled to the rear wall 6b. Each fixation member 8', 8" defines a fixing portion 8a, 8b configured to allow the connection to the chassis 2. In detail, the fixing portions 8a, 8b are realized in an upper portion along vertical axis of fixation members 8', 8".

Preferably, fixing portions 8a, 8b are profiled elements and area realized in one piece with the respective fixation member 8', 8'' and are preferably omega-shaped profiled elements. The operation of the embodiment of the invention as described above is the following.

The cover 7 may be attached or detached to the base 6 via coupling 11 and locking means 9 in order to store or allow substitution/installation of batteries in space 10, one above the other.

In view of the foregoing, the advantages of a battery pack and a vehicle according to the invention are apparent.

Thanks to the proposed battery pack it is possible to house batteries of any typology one above the other, thereby providing a compact battery pack.

Moreover, the proposed battery pack is particularly versatile and allows to provide different dimensions battery packs for housing a different number of electrical batteries with small modifications.

Furthermore, the proposed battery pack is cheap and can be manufactured easily.

It is clear that modifications can be made to the described battery pack and vehicle which do not extend beyond the scope of protection defined by the claims.

The shape of the battery pack and the number and shapes of batteries may vary. Similarly, the fixation systems may be of any shape and numbers.

Similarly, shapes of the flanges, strips, fixation means as disclosed in the drawings may vary.

## Claims

1. Battery pack (5) for a heavy vehicle (1), said battery pack (5) extending along a longitudinal axis (A'), a transversal axis (B') and a vertical axis (C') and comprising a base (6) configured to be fixed to a portion (2) of said vehicle (1) and a cover (7) selectively carried by said base (6),
wherein said base (6) comprises a pair of lateral walls (6a), a rear wall (6b), a base wall (6c) and an intermediate wall (6c') vertically distance from said base wall (6c) and connected to said lateral walls (6a), said cover (7) comprising a roof (7a) and a front wall (7b) dimensioned to selectively cooperate at contact with said walls (6a, 6b, 6c) of said base (6), said cover (7) being connected to one wall of said base (6) via a releasable connection (11) in order to assume an attached configuration wherein said cover (7) is connected to one among said walls (6a, 6b, 6c) of said base (6) or a detached configuration wherein said cover (7) is separated from said base (6), wherein said resealable connection (11), in said attached configuration, is configured to assume a first configuration wherein the cover (7) cooperates at contact with said base (6) to define a space (10) for housing at least a pair of electrical battery (100) vertically adjacent one to the other or a second configuration wherein said cover (7) allows access to said space (10), wherein said resealable connection (11), in said attached configuration, defines a hinge connection between said cover (7) and said base (6).

2. Battery pack according to claim 1, wherein said resealable connection (11) comprises at least one opening (13) realized in one between said base (6) and said cover (7) and at least a protuberance (12) realized in the other between said base (6) and said cover (7) and housed in said opening (13).

3. Battery pack according to claim 2, wherein said protuberance (12) is a flange extending from said rear wall (6b) and said opening (13) is realized in said roof (7a).

4. Battery pack according to any of the preceding claims, further comprising at least a cross-member (6d) configured to connect together said lateral walls (6a).

5. Battery pack according to claim 4, wherein said cross-member (6d) comprises a single x-shaped member connected between said lateral walls (6a).

6. Battery pack according to any of the preceding claims, further comprising locking means (9) configured to lock said cover (7) to said base (6) in said first configuration.

7. Battery pack according to any of the preceding claims, further comprising a fixation portion (8) configured to connect one among said walls (6a, 6b, 6c) of said base (6) to a portion of said vehicle (1).

8. Battery pack according to claim 7, wherein said fixation portion (8) is coupled to said rear wall (6b) of said base (6) and comprises at least a fixing portion (8a, 8b) for allowing the fixation to said portion.

9. Battery pack according to any of the preceding claims, further comprising a fixation system (20) for fixing said battery (100) to one among said walls (6a, 6b, 6c) of said base (6).

10. Battery pack according to claim 8, wherein said fixation system (20) comprises a strip (21) configured to cooperate at contact with said battery (100) and a pair of levers configured to connect said strip (21) to one among said walls (6a, 6b, 6c) of said base (6).

11. Battery pack according to any of the preceding claim wherein said intermediate wall (6c') divides said space (10) into two equal portions.

12. Vehicle (1) comprising a chassis (2) and a cabin (3), said vehicle (1) comprising a battery pack (5) according to any of the preceding claims, carried by said chassis (2) by this latter.

13. Vehicle according to claim 10, wherein said battery pack (5) is fixed by said fixation portions (8) cantilevered below said chassis (2).
